# EUROPEAN PATENT APPLICATION

(11) **EP 4 671 989 A1**
(43) Date of publication of application: **31.12.2025**
(21) Application number: 25175026.1
(22) Date of filing: 08.05.2025
(51) Int. Cl.: G06F 9/50

(54) **MEMORY BANDWIDTH CONTROL IN A CORE**

(30) Priority: 28.06.2024 US 202418758220
(71) Applicant: INTEL Corporation, Santa Clara, CA 95054 (US)
(72) Inventor: Madduri, Venkateswara Rao, Austin TX, 78733 (US); Brandt, Jason W., Austin TX, 78746 (US); Abraham, Philip, Rye NY, 10580 (US); Herdrich, Andrew J., Hillsboro OR, 97123 (US); Luck, Anthony, San Jose CA, 95112 (US)
(74) Representative: Samson & Partner Patentanwälte mbB

(57) **Abstract**

Techniques for controlling bandwidth in a core are described. An exemplary core includes a memory bandwidth monitor per thread local to the core, each thread's local bandwidth monitor to at least allocate bandwidth for memory requests originating from the thread according to a class of service level stored in a field of quality of service (QoS) model-specific register (MSR), the class of service level pointed to by a class of service field in a platform quality of service MSR; and execution resources to support execution of at least one thread of the core.

## Description

### FIELD OF INVENTION

The field of invention relates generally to computer architecture, and, more specifically, to allocating shared resources.

### BACKGROUND

Processor cores in multicore processors may use shared system resources such as caches (e.g., a last level cache or LLC), system memory, input/output (I/O) devices, and interconnects. The quality of service provided to applications may be degraded and/or unpredictable due to contention for these or other shared resources.

Some processors include technologies, such as Resource Director Technology (RDT) from Intel Corporation, which enable visibility into and/or control over how shared resources such as LLC and memory bandwidth are being used by different applications executing on the processor. For example, such technologies may provide for system software to allocate different amounts of a resource to different applications and/or monitor resource usage and temporarily prevent access to a resource by a low priority application that exceeds a quota.

### BRIEF DESCRIPTION OF DRAWINGS

Various embodiments in accordance with the present disclosure will be described with reference to the drawings, in which:
FIG. 1 illustrates a block diagram of a system in which per thread memory bandwidth is supported.
FIG. 2 illustrates embodiments of the IA32_PQR_ASSOC MSR and IA32_Qos_Core_BW_Thrtl_N MSRs which are used to allocate bandwidth using the memory bandwidth monitor and/or local bandwidth monitor.
FIG. 3 illustrates embodiments of the IA32_PQR_ASSOC MSR and IA32_Qos_Core_BW_Thrtl_CTL_N MSRs which are used to allocate bandwidth using the memory bandwidth monitor and/or local bandwidth monitor.
FIG. 4 illustrates examples of encoding bandwidth options for the allocated memory bandwidth scale ranges.
FIG. 5 illustrates examples of a MSR to enable CBA.
FIG. 6 illustrates examples of memory request queues within a processor or core.
FIG. 7 illustrates an exemplary method flow that involves changing memory bandwidth in a core.
FIG. 8 illustrates an example computing system.
FIG. 9 illustrates a block diagram of an example processor and/or System on a Chip (SoC) that may have one or more cores and an integrated memory controller.
FIG. 10 is a block diagram illustrating a computing system 1000 configured to implement one or more aspects of the examples described herein.
FIG. 11 shows a parallel compute system 1100, according to some examples.
FIGS. 12A-12B illustrate a hybrid logical/physical view of a disaggregated parallel processor, according to examples described herein.
FIG. 13 is a block diagram illustrating the use of a software instruction converter to convert binary instructions in a source ISA to binary instructions in a target ISA according to examples.
FIG. 14 is a block diagram illustrating an IP core development system 1400 that may be used to manufacture an integrated circuit to perform operations according to some examples.

### DETAILED DESCRIPTION

The present disclosure relates to methods, apparatus, systems, and non-transitory computer-readable storage media for adjusting memory bandwidth of a core.

In the following description, numerous specific details are set forth. However, it is understood that embodiments may be practiced without these specific details. In other instances, well-known circuits, structures, and techniques have not been shown in detail in order not to obscure the understanding of this description.

References in the specification to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

As used in this specification and the claims and unless otherwise specified, the use of the ordinal adjectives "first," "second," "third," etc. to describe an element merely indicates that a particular instance of an element or different instances of like elements are being referred to, and is not intended to imply that the elements so described must be in a particular sequence, either temporally, spatially, in ranking, or in any other manner. Also, as used in descriptions of embodiments of the invention, a "/" character between terms may mean that what is described may include or be implemented using, with, and/or according to the first term and/or the second term (and/or any other additional terms).

Also, the terms "bit," "flag," "field," "entry," "indicator," etc., may be used to describe any type or content of a storage location in a register, table, database, or other data structure, whether implemented in hardware or software, but are not meant to limit embodiments of the invention to any particular type of storage location or number of bits or other elements within any particular storage location. The term "clear" may be used to indicate storing or otherwise causing the logical value of zero to be stored in a storage location, and the term "set" may be used to indicate storing or otherwise causing the logical value of one, all ones, or some other specified value to be stored in a storage location; however, these terms are not meant to limit embodiments of the present invention to any particular logical convention, as any logical convention may be used within embodiments of the present invention.

In this specification and its drawings, the term "thread" and/or a block labeled "thread" may mean and/or represent an application, software thread, process, virtual machine, container, etc. that may be executed, run, processed, created, created, assigned, etc. on, by, and/or to a core.

The term "core" may mean any processor or execution core, as described and/or illustrated in this specification and its drawings and/or as known in the art. The term "uncore" may mean any circuitry, logic, sub-systems, etc. (e.g., an integrated memory controller (iMC), power management unit, performance monitoring unit, system and/or I/O controllers, etc.) in/on a processor or system-on-chip (SoC) but not within a core, as described and/or illustrated in this specification and its drawings and/or as known in the art (e.g., by the name uncore, system agent, etc.). However, use of the terms core and uncore in in the description and figures does not limit the location of any circuitry, hardware, structure, etc., as the location of circuitry, hardware, structure, etc. may vary in various embodiments. For example, model specific registers (MSRs) (e.g., control registers as defined below) 104 may represent one or more registers, one or more of which may be in a core, one or more of which may be in an uncore, etc.

The term "quality of service" (or QoS) may be used to mean or include any measure of quality of service mentioned in this specification and/or known in the art, to an individual thread, group of threads (including all threads), type of thread(s), including measures of and/or related to performance, predictability, etc. The term "memory bandwidth allocation" (or MBA) may be used to refer to one or more techniques or the use of one or more techniques to allocate memory bandwidth and/or a quantity of memory bandwidth allocated, provided available, etc. or to be allocated, etc. The term "cache bandwidth allocation" or (CBA) may be used to refer to one or more techniques or the use of one or more techniques to allocate memory bandwidth and/or a quantity of memory bandwidth allocated, provided available, etc. or to be allocated, etc.

CBA and/or MBA allow an operating system, virtual machine monitor (also known as a hypervisor), or other management system to control internal core and downstream bandwidth for each logical processor. CBA and MBA provide a system-wide mechanism to throttle the bandwidth across different caches in the system including external memory, as well as control within a processor core or module. In combination, CBA and MBA provide both deterministic control and dynamic management of bandwidth resources to meet system Service Level Objectives (SLOs).

Examples detailed here may be used to allocate shared resources, such as caches and memory, in computer systems. For example, embodiments may perform MBA and/ or CBA with improved behavior and accuracy and may use MBA and/ or CBA to provide increased throughput and greater efficiency, compared to previously known approaches, and/or may provide for efficient sharing of a cache. The use of embodiments may reduce "noisy neighbor" problems in which QoS for a thread is adversely and sometimes unacceptably affected by a different thread.

In some examples, throttling granularity as described above may be provided for configuration purposes and may be applied using a control mechanism that approximates the granularity, based on time, number of credits, etc. In embodiments, rate limit settings (e.g., throttling levels, delay values) may be applied to threads or cores through configuration or MSRs that may be configured by system software to map threads or cores to a class of service (CLOS) and a CLOS to a rate limit setting. For example, throttling may be applied through a first MSR (e.g., IA32_PQR_ASSOC - where PQR stands for platform quality of service) that maps a thread (logical processor) to a class of service (CLOS) and through, in some examples, a second MSR to allocate memory bandwidth throttle level (e.g., IA32_QoS_Core_BW_Thrtl_N) for each CLOS and/or, in some examples, a third MSR to specify bandwidth for each class of service (e.g., IA32_QoS_Core_BW_Thrtl_CTL_N). In some

Embodiments may provide for mapping a thread to any number of CLOS (e.g., 8, 15, etc.), differentiated with a CLOS identifier (CLOSID). For example, one or more control registers (e.g., programmable by a basic input/output system (BIOS) for power-up calibration and/or system software) may include a number of bits (e.g., 4, 8) to specify one of a corresponding number of delay values (e.g., MBEDelay). For example, four 32-bit control registers may be provided to accommodate 16 CLOSIDs and 8-bit MBEDelay values. In embodiments, a default, minimal delay value may be used as an unthrottled delay and programmed by microcode.

This may not allow for a capability to directly cap the maximum bandwidth from each logical processor. Further, the bandwidth from each logical processor can be bursty which affects the latency while still meeting external bandwidth requirement.

Embodiments may provide better QoS than existing technologies in which the pace of allocation decisions and adjustments may be limited by the pace at which system software operates, while remaining compatible (e.g., architecturally) with existing technologies. Embodiments may do so, for example, with dynamic hardware controllers, internal to core or per-core circuitry, which may react to changing bandwidth conditions faster (e.g., at the microsecond level) than approaches that use strict bandwidth control mechanisms. In embodiments, the use of dynamic hardware control of MBA may allow software that primarily uses an LLC to experience increased throughput for a given throttling level (as described below) and due to fine-grained interleaving of high and low priority requests from threads, may lead to an increase in system throughput. In embodiments, hardware may provide dynamic monitoring of bandwidth and fine-grained calibration of control that may result in greater throughput and application performance, particularly for an application with varying levels of LLC use that may cause bandwidth demand/use to exceed a threshold intermittently, compared to previous approaches that use a control mechanism based on average bandwidth use/demand over greater periods, with coarser calibrations.

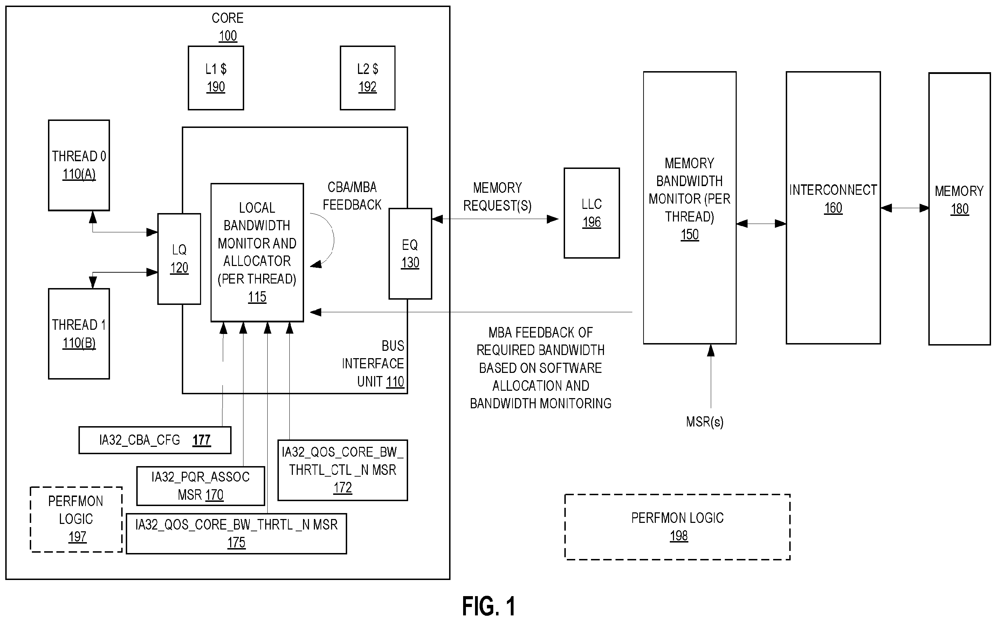

FIG. 1 illustrates a block diagram of a system in which per thread memory bandwidth is supported. As shown, a core 100 includes two threads (thread 0 110(A) and thread 110(B)) which may be memory and/or cache bandwidth limited. Note that the system may include any number of cores of any architecture (e.g., an embodiment may include a heterogeneous processor or system having cores of different architectures), with any number of threads per core (e.g., an embodiment may include a first core with and/or supporting a first number of threads and a second core with and/or supporting a second (which may be different from the first) number of threads.

In some embodiments, the memory that is to be bandwidth limited is a cache (e.g., L1 cache 190, L2 cache 192, an LLC or a level 3 (L3) cache 196) and/or memory bandwidth. In embodiments, the shared cache may be fabricated on the same substrate (e.g., semiconductor chip or die, SoC, etc.) and the memory 180 (e.g., DDR, CXL, etc.) may be on one or more separate substrates and/or in one or more packages separate from the package containing the shared cache 196; however, any arrangement and/or integration of shared resources (e.g., cache and/or memory) and users (e.g., cores and/or threads) in/on a substrate, chiplet, multichip module, package, etc. is possible in various embodiments. In some embodiments, the memory that is to be bandwidth limited is main memory.

In some examples, the core 100 includes one or more types of MSRs to configure CBA and/or MBA support (IA32_PQR_ASSOC 170, MSR 172, IA32_L2_QoS_Ext_BW_Thrtl_N MSR 175, IA32_L2_QoS_Ext_BW_Thrtl_CTRL_N 172, and/or IA21_CBA_CFG 177). In particular, these registers (note the names of these registers) are examples and other names could be used are used to configure local bandwidth monitor(s) and allocator(s) 115 which controls CBA and/or MBA and/or memory bandwidth monitor(s) 150 which controls MBA.

As noted above, for each logical processor, a MSR 170 (e.g., the IA32_PQR_ASSOC MSR) specifies an active class of service (CLOS). Software can control per-core memory bandwidth by programming the MBA delay values (percentage of throttling) into a quality of service MSR (e.g., IA32_L2_QoS_Ext_BW_Thrtl_N MSR) for traffic to the external memory) as noted.

In some examples, each logical processor gets a memory bandwidth target signaled through a Memory Bandwidth Enforcement (MBE) level from the memory bandwidth monitor (per thread) 150 which ranges from 0-15 (0 being unthrottled, 15 being most throttled). The MBE level is based on the delay value programmed by software (as a percentage of throttling) in the IA32_L2_QoS_Ext_BW_Thrtl_MSR. The memory bandwidth monitor (per thread) 150 is responsible for adapting MBE level to account for memory traffic, cache hit/miss rate, etc. and takes in the CLOS from IA32_PQR_ASSOC MSR.

A quality of service bandwidth per thread MSR (e.g., A32_Qos_Core_BW_Thrtl_N where N is the thread number) 175 includes fields (in some embodiments, 8-bit fields, however other sized fields may be used such as 4-bit, 16-bit, etc.) that specify a throttle level for a given CLOS. This MSR 175 enables software to communicate the memory bandwidth QoS requirements of an application running on the logical processor. The programmed value is used by the logical processor to manage the underlying microarchitectural resources such as queue sizes and service rate control. The thread scope enables migration of a virtual machine in a virtualized environment.

The CLOS field of the IA32_PQR_ASSOC MSR 170 is used to index into the MSRs 175 which provide a memory bandwidth level. This level is used by each of the logical processors to control the bandwidth onto an interconnect. The reset value of the CLOS[i].Level=0 indicates unthrottled bandwidth. This field can be programmed from 0 to 15 in some embodiments. Any values outside this range will cause a general protection fault. A higher value of CLOS[i].Level means more bandwidth throttling and lower number indicates lesser throttling.

When the IA32_QoS_Core_BW_Thrtl_N MSR 175 has a throttled value, the resolved MBE level as seen by a core is:
Maximum (IA32_Qos_Core_BW_Thrtl_N programmed CLOS.Level, uncore MBE level)

The logical processor scoped IA32_QoS_Core_BW_Thrtl_n MSRs 170 provide an allocated bandwidth field for each class of service. Software can directly write values in bytes/sec per class of service such that the sum is below the actual memory bandwidth provided for an entire socket.

Additional MSRs may be used to provide CBA and/or MBA. These registers allow for the programming of memory bandwidth limits for each logical processor. The IA32_QoS_Core_BW_Thrtl_CTL_n MSRs 172 provide fields for each class of service to specify bandwidth in KB/sec, MB/sec, or GB/sec. This allows for a bandwidth to be controlled across all of the cache hierarchy. Additionally, the software specified bandwidth limits will be achieved between L1 to L2 caches, L2 and L3 caches, and indirectly to the external memory. Additionally, in some examples, there are sub-fields within each CLOS indexed field to disable L1 cache to L2 cache throttling and enable user/supervisor mode bandwidth throttling.

This makes it easier for software to understand the actual bandwidth limit when expressed in bytes/sec (KB/sec or MB/sec or GB/sec). Software can use the bandwidth limit of each job such that the bandwidth sum of all the jobs running on a socket is below the memory bandwidth of the entire socket. Additionally, the bandwidth limits will be achieved independent of the cores' operating frequency. This eliminates the software control loop and is more precise and has tighter bandwidth control.

A local bandwidth monitor and/or allocator (per thread) 115 of a bus interface unit 110 handles the bandwidth throttling for a thread (e.g., a request rate over an interconnect 160 - which may be an on-die interconnect or an interconnect to couple to devices off die). The local bandwidth monitor and/or allocator (per thread) 115 also dictates a number of entries in a local queue (LQ) 120 (which interacts with threads) and/or an external queue (EQ) 130 (which interacts with the memory bandwidth monitor (per thread) 150, interconnect 160, and/or memory, cache, etc.). Note that bandwidth throttling may be linear or non-linear.

Note that monitors 115 and 150 are combined in some embodiments. That is, in some embodiments, the existence of the local bandwidth monitor 150 is orthogonal to existence of the bandwidth monitor 150 (i.e., the system can function with or without monitor 150). When 150 exists the lower of the bandwidth level determined by monitor 115 and monitor 150 will be effective. When monitor 115 is present and monitor 150 is not present then monitor 115 is the sole bandwidth controller.

In embodiments, rate limiters may limit use of a resource (e.g., memory bandwidth) by a corresponding core and/or thread, for example by limiting access by the core/thread to the resource based on time, based on a crediting scheme, etc. In embodiments, a throttling technique may be used to restrict or prevent access during one or more first periods within a second (larger than the first) period, while allowing or providing access during the remainder of the second period. Embodiments may provide for various granularities at which access may be restricted/prevented, for example, embodiments may provide for a throttling granularity of 10% such that a rate limiter may perform throttling to reduce MBA to any of 90%, 80%, 70%, etc. of full capacity.

In embodiments, for example in embodiments in which cores are connected through a mesh interconnect on which messaging may be managed or controlled using a crediting scheme, the crediting scheme may be used to limit the rate at which cores are able to pass messages such as memory access requests toward a memory controller. In these and/or other embodiments, as may be true of any circuitry included in embodiments, circuitry that performs rate limiting may be integrated into or with other circuitry of a processor, such as circuitry in or at an interface between a core and a mesh that connects to an integrated memory controller (iMC) (e.g., indirectly through such interfaces associated with other cores) but be conceptually represented as a separate block in a drawing.

In some embodiments, at least one of the memory bandwidth monitor 150 and/or local bandwidth monitor 115 includes a rate selector that may include hardware and/or software providing a monitoring capability (further described below) to determine whether its associated core/thread is overutilizing memory bandwidth and hardware and/or software providing a rate setting capability to set and adjust rate limits for cores/threads that are overusing bandwidth or consuming less than they are allocated. For example, if a measurement from the monitoring capability indicates that memory bandwidth demand is higher than a prescribed memory bandwidth demand, a first MBA rate setting may be selected, where the first MBA rate setting is limited and slower than a second MBA rate setting (e.g., unlimited, unthrottled), that may be otherwise selected and/or used.

In some embodiments, a rate selector may be part of a feedback loop that includes input to the rate selector from a point downstream of (i.e., further from the source than) the rate limiter. For example, a rate selector may receive input from and/or related to an interface between an LLC (e.g., L3 cache or L4 cache) and memory. Note that there are two feedback loops in some examples.

The allocated bandwidth in bytes/sec is mapped to an enforced bandwidth within a small-time interval. The number of clocks in the time interval are calculated based on the software allocated bandwidth in the MSRs, and underlying hardware. The clock interval counter which is per logical processor counts the number of clocks. When the counter reaches the threshold value of the al clock time interval it gets reset and begins a new time interval count. Alternatively, the counter can be reloaded with the crystal clock time interval threshold value and counted down to a value of 0. Whenever the counter value is 0 it gets reloaded with the time interval value specified in the clock threshold register.

In some examples, a rate selector may include a hardware controller (as further described below) within and/or dedicated to a core, which receives information from a caching agent within and/or dedicated to the core. In embodiments, a rate selector may include a hardware controller that may be enabled/disabled (e.g., by programming an MSR such as MBA_CFG) such that the rate may be selected either by the hardware controller (as further described below) or by a software controller (e.g., based on a feedback loop as described below and as shown in Figure 1). Use of the hardware controller may be desired for usages (e.g., datacenter) that may benefit from faster response (e.g., on the order of microseconds instead of hundreds of milliseconds or seconds that software may need for system-level sampling of thread resource monitoring identifiers (RMIDs)), and/or for any other reason. Use of the software controller may be desired for programming compatibility with previous techniques that did not include a hardware controller, for usages (e.g., internet-of-things devices) that might not benefit from hardware control (e.g., because they may need simple, deterministic bandwidth capping), and/or for any other reason.

In some embodiments, a per thread rate limiter receives an input from a rate selector and/or through a feedback loop that has determined that a corresponding thread is to be limited (and, in embodiments, a value of a limited rate to be applied). The determination may be made based on monitoring (or measuring, etc.) demand for and/or use of a shared resource (e.g., intra-die interconnect (IDI) or memory bandwidth) as described below and/or elsewhere in this specification.

For example, the core may be directed to constrain itself based on an uncore-defined (e.g., by a rate selector) per-thread number of IDI requests per a period of time. In or for the mid-level cache (MLC, e.g., L2 cache), time may be divided into constant-length windows. Throttle circuitry/logic (e.g., a rate limiter) in an MLC cluster may determine what microoperation (up) allocation throttle level will be applied for each thread, and throttle circuitry/logic (e.g., a uop allocator) in the out-of-order (OOO) cluster may apply that throttle.

In some examples, performance monitoring (perfmon) logic 197 and/or 198 may be used to monitor performance. For example, a perfmon counter may count an average LLC 196 miss load latency to memory 180. For example, a perfmon counter may count a sum of read + write + prefetch requests to provide a total bandwidth between L2 cache 194 and LLC cache 196. For example, a perfmon counter may count a number of cacheable stores from L1 to L2. For example, a perfmon counter may count a number of cycles a job is throttled due to a bandwidth limit. Some of these example counters may be used by a software loop.

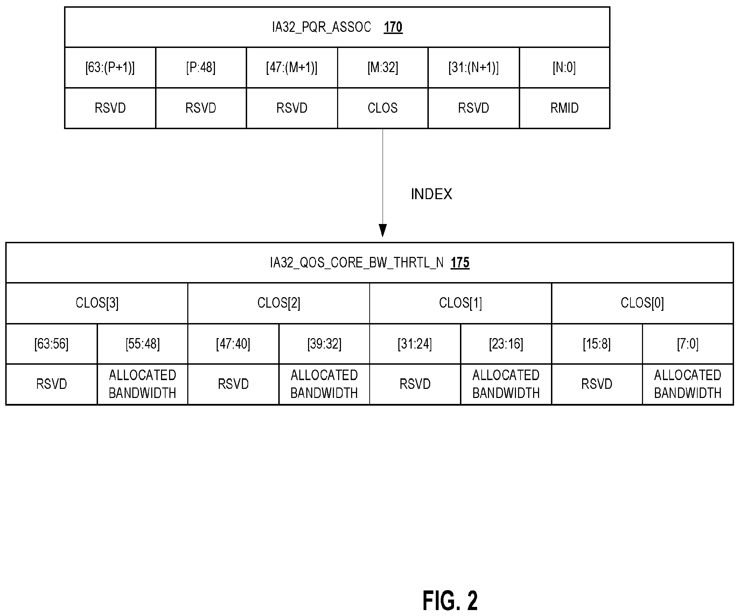

FIG. 2 illustrates embodiments of the IA32_PQR_ASSOC MSR and IA32_Qos_Core_BW_Thrtl_N MSRs which are used to allocate bandwidth using the memory bandwidth monitor 150 and/or local bandwidth monitor 115. Note that "N" in the name refers to a thread in some examples. As shown, one of the fields of the IA32_PQR_ASSOC MSR 170 is a CLOS value. This value services an index into IA32_QoS_Core_BW_Thrtl_N MSR 175. For example, if CLOS=3 in IA32_PQR_ASSOC MSR 170, then the CLOS[3] level field of IA32_QoS_Core_BW_Thrtl_N MSR 175 is indexed. The value that is stored in that field is used to map to one or more of a request rate and/or queue threshold(s). The IA32_PQR_ASSOC MSR 170 also includes a resource monitoring identifier (RMID). A RMID is a mechanism to indicate a software-defined identifier for a thread (note that a logical processor may have more than one thread) that is to run on a core. In some examples, there is IA32_PQR_ASSOC MSR per logical processor and an IA32_QoS_Core_BW_Thrtl_N register per thread.

The IA32_QoS_Core_BW_Thrtl_N MSR 175 includes fields to allocate bandwidth per CLOS. Throttling bandwidth is specified as a level a software control loop is needed to achieve the desired bandwidth.

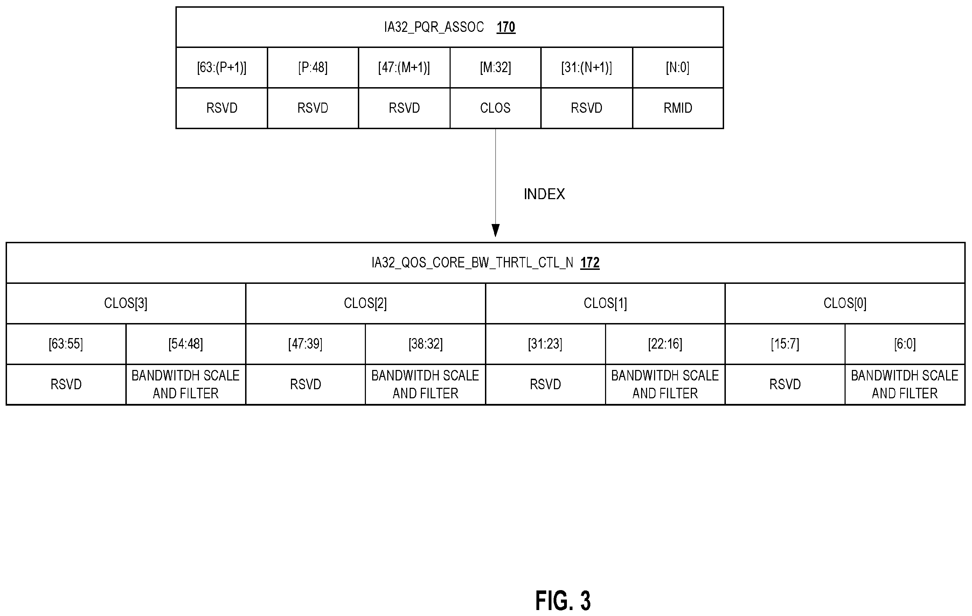

FIG. 3 illustrates embodiments of the IA32_PQR_ASSOC MSR and IA32_Qos_Core_BW_Thrtl_CTL_N MSRs which are used to allocate bandwidth using the memory bandwidth monitor 150 and/or local bandwidth monitor 115. As shown, one of the fields of the IA32_PQR_ASSOC MSR 170 is a CLOS value. This value services an index into IA32_QoS_Core_BW_Thrtl_CTL_N MSR 172. For example, if CLOS=3 in IA32_PQR_ASSOC MSR 170, then the CLOS[3] level field of IA32_QoS_Core_BW_Thrtl_CTL_N MSR 172 is indexed. The value that is stored in that field is used to map to one or more of a request rate and/or queue threshold(s). The IA32_PQR_ASSOC MSR 170 also includes a resource monitoring identifier (RMID). In some examples, there is IA32_PQR_ASSOC MSR per logical processor and an IA32_QoS_Core_BW_Thrtl__CTL_ N register per thread.

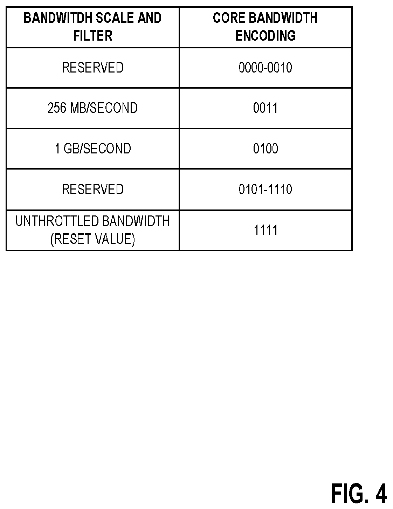

The IA32_QoS_Core_BW_Thrtl_CTL_ N MSR 172 includes fields to allocate bandwidth and/or define filtering per CLOS for CBA. FIG. 4 illustrates examples of encoding bandwidth options for the allocated memory bandwidth scale ranges. Note that only four bits (e.g., bits 3:0) out of the seven are utilized for bandwidth scaling in some examples. The other bits are used, in some examples, to disable L1 to L2 cache throttling, enable filtering, and/or enable user/supervisor mode bandwidth throttling. In other examples, one or more the bits marked as reserved in the figure are used for these purposes. In some examples, bits 5:4 of the field are used to set user/supervisor mode bandwidth throttling. For example, a value of 01 sets supervisor throttling, a value of 10 sets user throttling, and a value of 00 sets no throttling. In some examples, bit 6 of the field enables (e.g., when 0) or disables (e.g., when 1) L1 to L2 bandwidth throttling.

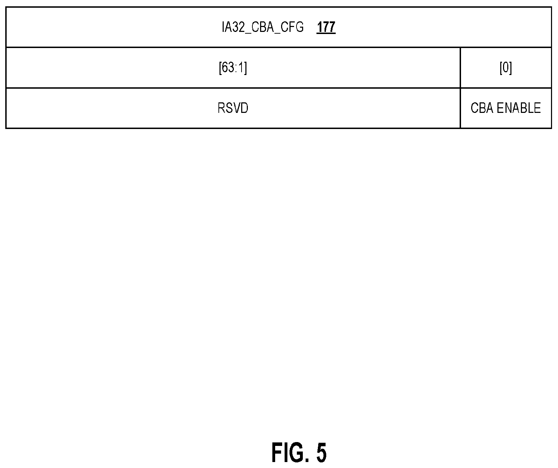

FIG. 5 illustrates examples of a MSR to enable CBA. An IA32_CBA_CFG MSR 177 is used to enable CBA in some examples. In some examples, CBA is enabled by setting bit 0 to be 1. Software can configure the feature using this MSR 177 and run programs that use throttling levels or bytes/sec. Note that in some examples, IA32_QoS_Core_BW_Thrtl_CTL_N MSR 172 and IA32_QoS_Core_BW_Thrtl_N MSR 175 are the same, but interpreted differently depending on the setting of IA32_CBA_CFG MSR 177 (e.g., when bit 0 is set IA32_QoS_Core_BW_Thrtl_CTL_ N MSR 172 is what is used to throttle bandwidth, etc.).

Using this bandwidth scale encoding, hardware implements a control loop to achieve the specified bandwidth.

In some embodiments, a number of supported Levels and CLOS for the logical processor are enumerated in a CPUID Leaf for symmetric enumeration as follows:

| INITIAL EAX VALUE | INITIAL ECX VALUE | | DESCRIPTION |
|---|---|---|---|
| 0X10 | 0X0 | EBX[5]=RESID = 1 | SUPPORTS A FIRST CBA WHEN SET TO 1 (e.g., IA32_QOS_CORE_BW_THRTL_N is used) |
| | 0X5 | EBX[5]=RESID | CBA FETATURE ENUMERATION |
| | | EAX[7:0] | MAXIMUM CORE THROTTLING LEVELS SUPPORTED BY A CORE FOR CBA (E.G., MAX LEVEL = 15) |
| | | EAX[11:8] | SCOPE OF THE IA32_QOS_CORE_BW_THRTL_N AND IA32_QOS_CORE_BW_THRTL_CTRL_N MSRS |
| | | | 1: LOGICAL PROCSSOR |
| | | | OTHER VALUES: RESERVED |
| | | EAX[31:12] | RESERVED |
| | | EBX[31:0] | RESERVED |
| | | ECX[4] | SUPPORTS CORE BAND WIDTH ALLOCATION IN MB/SEC (SECOND CBA MODE (e.g., IA32_QOS_CORE_BW_THRTL_CTL_N is used) |
| | | ECX[5] | FILTERING EXTENSIONS USING IA32_QOS_CORE_BW_THRTL_CTRL_N MSRS SUPPORTED |
| | | ECX[8:6] | RESERVED |
| | | ECX[9] | SUPPORTS 256 MB/SEC BANDWIDTH ALLOCATION IN IA32_QOS_CORE_BW_THRTL_CTRL_N MSRS |
| | | ECX[10] | SUPPORTS 1 GB/SEC BANDWIDTH ALLOCATION IN IA32_QOS_CORE_BW_THRTL_CTRL_N MSRS |
| | | ECX[11] | BANDWIDTH FILTERING SUPPORTED FOR USER/SUPERVISOR MODES IN IA32_QOS_CORE_BW_THRTL_CTRL_N MSRS |
| | | ECX[12] | SUPPORTS L1 -> L2 BANDWIDTH THROTTLING IN IA32_QOS_CORE_BW_THRTL_CTRL_N MSRS (IN SOME EXAMPLES, THIS SUPPORTS BANDWIDTH PROCESSING BETWEEN ONE CACHE LEVEL BELOW THE CACHE LEVEL GIVEN IN ECX[15:13\ |
| | | ECX[15:13] | CACHE LEVEL (STARTS AT 1) AT WHICH THROTTLING IS ENFORCED |
| | | ECX[31:13] | RESERVED |
| | | EDX[15:0] | HIGHEST CLOS SUPPORTED FOR RESID |
| | | ECX[31:16] | RESERVED |

In some embodiments, a number of supported Levels and CLOS for the logical processor are enumerated in a CPUID Leaf for asymmetric enumeration as follows:

| INITIAL EAX VALUE | INITIAL ECX VALUE | | DESCRIPTION |
|---|---|---|---|
| 0X28 | 0X0 | EBX[5]=RESID = 1 | SUPPORTS A FIRST CBA WHEN SET TO 1 (e.g., IA32_QOS_CORE_BW_THRTL_N is used) |
| | 0X5 | EBX[5]=RESID | CBA FETATURE ENUMERATION |
| | | EAX[7:0] | MAXIMUM CORE THROTTLING LEVELS SUPPORTED BY A CORE FOR CBA (E.G., MAX LEVEL = 15) |
| | | EAX[11:8] | SCOPE OF THE IA32_QOS_CORE_BW_THRTL_N AND IA32_QOS_CORE_BW_THRTL_CTRL_N MSRS |
| | | | 1: LOGICAL PROCSSOR |
| | | | OTHER VALUES: RESERVED |
| | | EAX[31:12] | RESERVED |
| | | EBX[31:0] | RESERVED |
| | | ECX[4] | SUPPORTS CORE BAND WIDTH ALLOCATION IN MB/SEC (SECOND CBA MODE (e.g., IA32_QOS_CORE_BW_THRTL_CTL_N is used) |
| | | ECX[5] | FILTERING EXTENSIONS USING IA32_QOS_CORE_BW_THRTL_CTRL_N MSRS SUPPORTED |
| | | ECX[8:6] | RESERVED |
| | | ECX[9] | SUPPORTS 256 MB/SEC BANDWIDTH ALLOCATION IN IA32_QOS_CORE_BW_THRTL_CTRL_N MSRS |
| | | ECX[10] | SUPPORTS 1 GB/SEC BANDWIDTH ALLOCATION IN IA32_QOS_CORE_BW_THRTL_CTRL_N MSRS |
| | | ECX[11] | BANDWIDTH FILTERING SUPPORTED FOR USER/SUPERVISOR MODES IN IA32_QOS_CORE_BW_THRTL_CTRL_N MSRS |
| | | ECX[12] | SUPPORTS L1 -> L2 BANDWIDTH THROTTLING IN IA32_QOS_CORE_BW_THRTL_CTRL_N MSRS (IN SOME EXAMPLES, THIS SUPPORTS BANDWIDTH PROCESSING BETWEEN ONE CACHE LEVEL BELOW THE CACHE LEVEL GIVEN IN ECX[15:13\ |
| | | ECX[15:13] | CACHE LEVEL (STARTS AT 1) AT WHICH THROTTLING IS ENFORCED |
| | | ECX[31:13] | RESERVED |
| | | EDX[15:0] | HIGHEST CLOS SUPPORTED FOR RESID |
| | | ECX[31:16] | RESERVED |

In some examples, the first CBA mode is enabled at reset and memory bandwidth is set to unthrottled. To switch to the second CBA mode, a write of 0xF8F8F8F8_F8F8F8F8 is written to IA32_QoS_Core_BW_Thtrl_n MSRs (or the CTL MSRs). IA32_CBA_CFG is then written to enable the second CBA mode. All of the CLOS fields are then configured as described.

To switch to the first CBA mode, a write of 0x08080808_08080808 is written to IA32_QoS_Core_BW_Thtrl_n MSRs (or the CTL MSRs). IA32_CBA_CFG is then written to disable the second CBA mode. All of the CLOS fields are then configured as described.

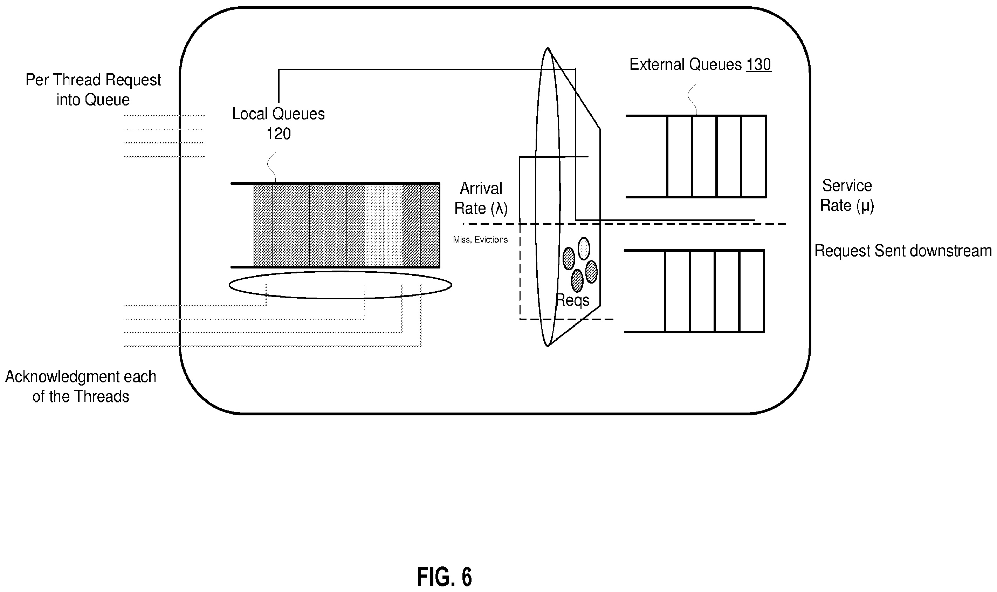

FIG. 6 illustrates examples of memory request queues within a processor or core. For example, local queue(s) 120 receive memory requests and external queue(s) 130 send out memory requests. Software is used program the desired allocated bandwidth in the corresponding CLOS field of the IA32_QoS_Core_BW_Thrtl_n MSR 175 along with the IA32_QoS_Core_BW_Thrtl_CTL_n MSR 172. The programmed values are used to manage the occupancy of the LQs 120 and EQs 130 within each of the clock time intervals. When a desired occupancy is achieved that meets the allocated bandwidth no more requests are accepted into the queues 120 or 130 for that clock time interval. A high arrival rate of requests to a particular cache may also result in cache misses and evictions.

To achieve an optimal memory access latency and not dispatch a burst of requests downstream, in some examples, the memory requests are smoothed out by spreading the requests (service rate) of each logical processor. The service rate of the requests within a time interval varies based on the allocated bandwidth and takes into account all memory requests including cache evictions.

Memory bandwidth allocation works independently for each of the logical processors when using shared resources within the system to achieve the specified bandwidth.

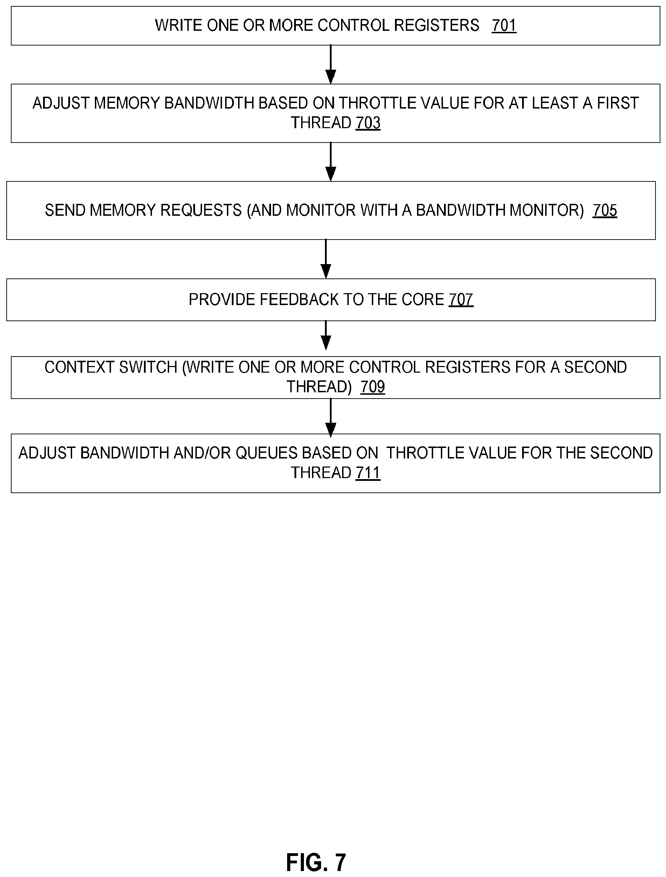

FIG. 7 illustrates an exemplary method flow that involves changing memory bandwidth in a core. At 701, software writes to one or more of the MSRs described herein. For example, software writes to a PQR MSR, THTRL MSR, and THRTL_CTL MSR.

The bandwidth level and/or queues are updated for a first thread based on the stored values of the MSRs at 703.

At 705, memory requests are sent (and monitored with a bandwidth monitor) from the core and responded to. Additionally, feedback is provided to the core regarding required bandwidth for the thread based on software allocation and bandwidth monitoring at 707.

At 709 a context switch occurs wherein the first software thread is to be swapped for a second software thread. The context switch may involve storing state, etc., but includes writing to one or more of the MSRs.

The bandwidth level and/or queues are updated for the second software thread based on the stored values at 711.

The above embodiments may be embodied in several different types of architectures and systems, examples of which are detailed below.

### Example Architectures

Detailed below are descriptions of example computer architectures. Other system designs and configurations known in the arts for laptop, desktop, and handheld personal computers (PC)s, personal digital assistants, engineering workstations, servers, disaggregated servers, network devices, network hubs, switches, routers, embedded processors, digital signal processors (DSPs), graphics devices, video game devices, set-top boxes, micro controllers, cell phones, portable media players, hand-held devices, and various other electronic devices, are also suitable. In general, a variety of systems or electronic devices capable of incorporating a processor and/or other execution logic as disclosed herein are generally suitable.

### Example Systems

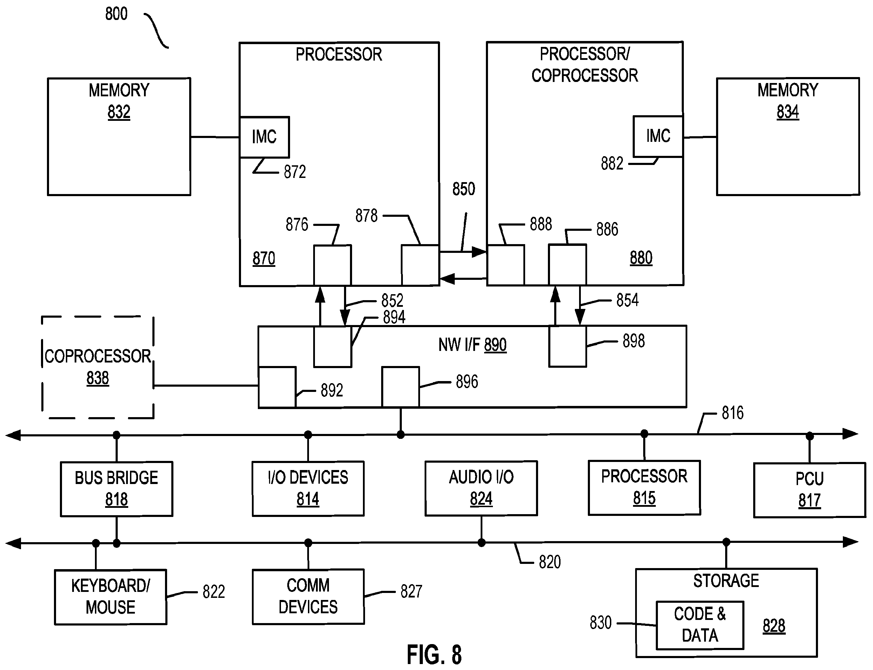

FIG. 8 illustrates an example computing system. Multiprocessor system 800 is an interfaced system and includes a plurality of processors or cores including a first processor 870 and a second processor 880 coupled via an interface 850 such as a point-to-point (P-P) interconnect, a fabric, and/or bus. In some examples, the first processor 870 and the second processor 880 are homogeneous. In some examples, first processor 870 and the second processor 880 are heterogenous. Though the example multiprocessor system 800 is shown to have two processors, the system may have three or more processors, or may be a single processor system. In some examples, the computing system is a system on a chip (SoC).

Processors 870 and 880 are shown including integrated memory controller (IMC) circuitry 872 and 882, respectively. Processor 870 also includes interface circuits 876 and 878; similarly, second processor 880 includes interface circuits 886 and 888. Processors 870, 880 may exchange information via the interface 850 using interface circuits 878, 888. IMCs 872 and 882 couple the processors 870, 880 to respective memories, namely a memory 832 and a memory 834, which may be portions of main memory locally attached to the respective processors.

Processors 870, 880 may each exchange information with a network interface (NW I/F) 890 via individual interfaces 852, 854 using interface circuits 876, 894, 886, 898. The network interface 890 (e.g., one or more of an interconnect, bus, and/or fabric, and in some examples is a chipset) may optionally exchange information with a co-processor 838 via an interface circuit 892. In some examples, the co-processor 838 is a special-purpose processor, such as, for example, a high-throughput processor, a network or communication processor, a compression engine, a graphics processor, a general purpose graphics processing unit (GPGPU), a neural-network processing unit (NPU), an embedded processor, a security processor, a cryptographic accelerator, a matrix accelerator, an in-memory analytics accelerator, , a data streaming accelerator, data graph operations, or the like.

A shared cache (not shown) may be included in either processor 870, 880 or outside of both processors, yet connected with the processors via an interface such as P-P interconnect, such that either or both processors' local cache information may be stored in the shared cache if a processor is placed into a low power mode.

Network interface 890 may be coupled to a first interface 816 via interface circuit 896. In some examples, first interface 816 may be an interface such as a Peripheral Component Interconnect (PCI) interconnect, a PCI Express interconnect or another I/O interconnect. In some examples, first interface 816 is coupled to a power control unit (PCU) 817, which may include circuitry, software, and/or firmware to perform power management operations with regard to the processors 870, 880 and/or co-processor 838. PCU 817 provides control information to a voltage regulator (not shown) to cause the voltage regulator to generate the appropriate regulated voltage. PCU 817 also provides control information to control the operating voltage generated. In various examples, PCU 817 may include a variety of power management logic units (circuitry) to perform hardware-based power management. Such power management may be wholly processor controlled (e.g., by various processor hardware, and which may be triggered by workload and/or power, thermal or other processor constraints) and/or the power management may be performed responsive to external sources (such as a platform or power management source or system software).

PCU 817 is illustrated as being present as logic separate from the processor 870 and/or processor 880. In other cases, PCU 817 may execute on a given one or more of cores (not shown) of processor 870 or 880. In some cases, PCU 817 may be implemented as a microcontroller (dedicated or general-purpose) or other control logic configured to execute its own dedicated power management code, sometimes referred to as P-code. In yet other examples, power management operations to be performed by PCU 817 may be implemented externally to a processor, such as by way of a separate power management integrated circuit (PMIC) or another component external to the processor. In yet other examples, power management operations to be performed by PCU 817 may be implemented within BIOS or other system software.

Various I/O devices 814 may be coupled to first interface 816, along with a bus bridge 818 which couples first interface 816 to a second interface 820. In some examples, one or more additional processor(s) 815, such as co-processors, high throughput many integrated core (MIC) processors, GPGPUs, accelerators (such as graphics accelerators or digital signal processing (DSP) units), field programmable gate arrays (FPGAs), or any other processor, are coupled to first interface 816. In some examples, second interface 820 may be a low pin count (LPC) interface. Various devices may be coupled to second interface 820 including, for example, a keyboard and/or mouse 822, communication devices 827 and storage circuitry 828. Storage circuitry 828 may be one or more non-transitory machine-readable storage media as described below, such as a disk drive or other mass storage device which may include instructions/code and data 830 and may implement the storage 'ISAB03 in some examples. Further, an audio I/O 824 may be coupled to second interface 820. Note that other architectures than the point-to-point architecture described above are possible. For example, instead of the point-to-point architecture, a system such as multiprocessor system 800 may implement a multi-drop interface or other such architecture.

### Example Core Architectures, Processors, and Computer Architectures.

Processor cores may be implemented in different ways, for different purposes, and in different processors. For instance, implementations of such cores may include: 1) a general purpose in-order core intended for general-purpose computing; 2) a high-performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a co-processor including one or more special purpose cores intended primarily for graphics and/or scientific (throughput) computing. Such different processors lead to different computer system architectures, which may include: 1) the co-processor on a separate chip from the CPU; 2) the co-processor on a separate die in the same package as a CPU; 3) the co-processor on the same die as a CPU (in which case, such a co-processor is sometimes referred to as special purpose logic, such as integrated graphics and/or scientific (throughput) logic, or as special purpose cores); and 4) a system on a chip (SoC) that may be included on the same die as the described CPU (sometimes referred to as the application core(s) or application processor(s)), the above described co-processor, and additional functionality. Example core architectures are described next, followed by descriptions of example processors and computer architectures.

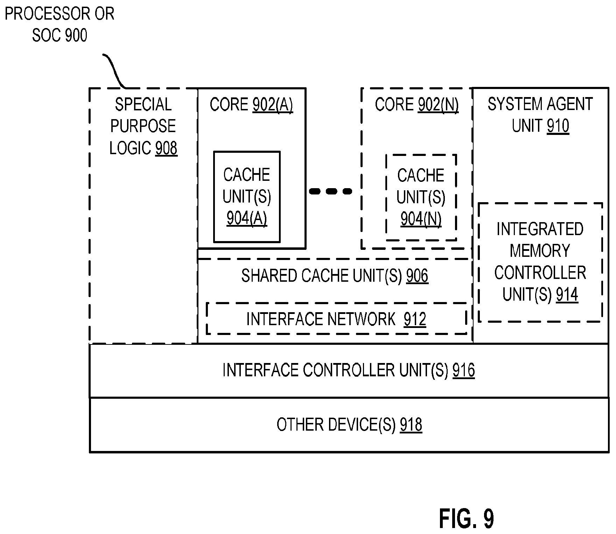

FIG. 9 illustrates a block diagram of an example processor and/or SoC 900 that may have one or more cores and an integrated memory controller. The solid lined boxes illustrate a processor and/or SoC 900 with a single core 902(A), system agent unit circuitry 910, and a set of one or more interface controller unit(s) circuitry 916, while the optional addition of the dashed lined boxes illustrates an alternative processor and/or SoC 900 with multiple cores 902(A)-(N), a set of one or more integrated memory controller unit(s) circuitry 914 in the system agent unit circuitry 910, and special purpose logic 908, as well as a set of one or more interface controller unit(s) circuitry 916. Note that the processor and/or SoC 900 may be one of the processors 870 or 880, or co-processor 838 or 815 of FIG. 8.

Thus, different implementations of the processor and/or SoC 900 may include: 1) a CPU with the special purpose logic 908 being a high-throughput processor, a network or communication processor, a compression engine, a graphics processor, a general purpose graphics processing unit (GPGPU), a neural-network processing unit (NPU), an embedded processor, a security processor, a matrix accelerator, an in-memory analytics accelerator, a compression accelerator, a data streaming accelerator, data graph operations, or the like (which may include one or more cores, not shown), and the cores 902(A)-(N) being one or more general purpose cores (e.g., general purpose in-order cores, general purpose out-of-order cores, or a combination of the two); 2) a co-processor with the cores 902(A)-(N) being a large number of special purpose cores intended primarily for graphics and/or scientific (throughput); and 3) a co-processor with the cores 902(A)-(N) being a large number of general purpose in-order cores. Thus, the processor and/or SoC 900 may be a general-purpose processor, co-processor or special-purpose processor, such as, for example, a network or communication processor, compression engine, graphics processor, GPGPU (general purpose graphics processing unit), a high throughput many integrated core (MIC) co-processor (including 30 or more cores), embedded processor, or the like. The processor may be implemented on one or more chips. The processor and/or SoC 900 may be a part of and/or may be implemented on one or more substrates using any of a number of process technologies, such as, for example, complementary metal oxide semiconductor (CMOS), bipolar CMOS (BiCMOS), P-type metal oxide semiconductor (PMOS), or N-type metal oxide semiconductor (NMOS).

A memory hierarchy includes one or more levels of cache unit(s) circuitry 904(A)-(N) within the cores 902(A)-(N), a set of one or more shared cache unit(s) circuitry 906, and external memory (not shown) coupled to the set of integrated memory controller unit(s) circuitry 914. The set of one or more shared cache unit(s) circuitry 906 may include one or more mid-level caches, such as level 2 (L2), level 3 (L3), level 4 (L4), or other levels of cache, such as a last level cache (LLC), and/or combinations thereof. While in some examples interface network circuitry 912 (e.g., a ring interconnect) interfaces the special purpose logic 908 (e.g., integrated graphics logic), the set of shared cache unit(s) circuitry 906, and the system agent unit circuitry 910, alternative examples use any number of well-known techniques for interfacing such units. In some examples, coherency is maintained between one or more of the shared cache unit(s) circuitry 906 and cores 902(A)-(N). In some examples, interface controller unit(s) circuitry 916 couple the cores 902(A)-(N) to one or more other devices 918 such as one or more I/O devices, storage, one or more communication devices (e.g., wireless networking, wired networking, etc.), etc.

In some examples, one or more of the cores 902(A)-(N) are capable of multi-threading. The system agent unit circuitry 910 includes those components coordinating and operating cores 902(A)-(N). The system agent unit circuitry 910 may include, for example, power control unit (PCU) circuitry and/or display unit circuitry (not shown). The PCU may be or may include logic and components needed for regulating the power state of the cores 902(A)-(N) and/or the special purpose logic 908 (e.g., integrated graphics logic). The display unit circuitry is for driving one or more externally connected displays.

The cores 902(A)-(N) may be homogenous in terms of instruction set architecture (ISA). Alternatively, the cores 902(A)-(N) may be heterogeneous in terms of ISA; that is, a subset of the cores 902(A)-(N) may be capable of executing an ISA, while other cores may be capable of executing only a subset of that ISA or another ISA.

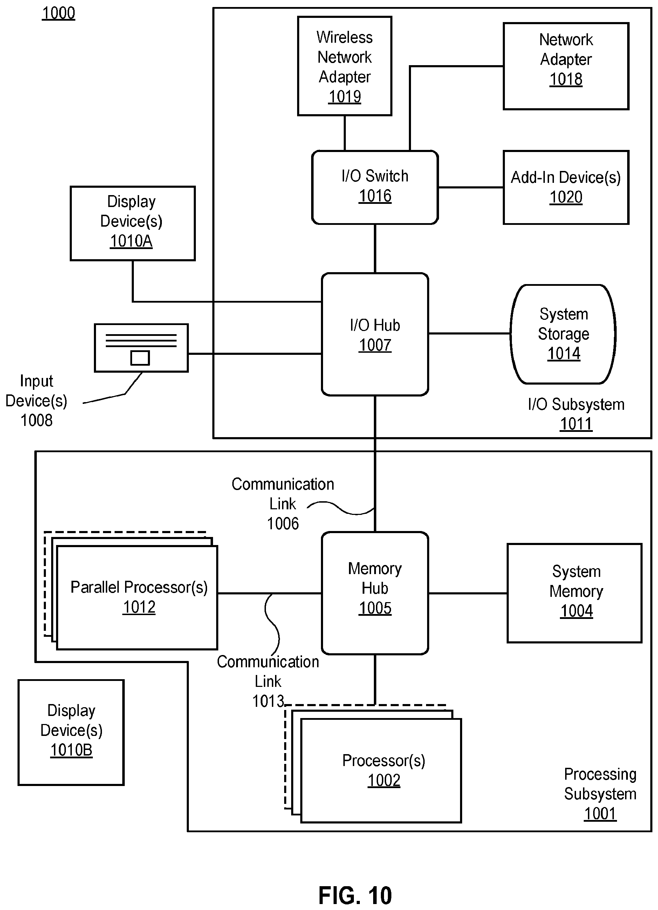

FIG. 10 is a block diagram illustrating a computing system 1000 configured to implement one or more aspects of the examples described herein. The computing system 1000 includes a processing subsystem 1001 having one or more processor(s) 1002 and a system memory 1004 communicating via an interconnection path that may include a memory hub 1005. The memory hub 1005 may be a separate component within a chipset component or may be integrated within the one or more processor(s) 1002. The memory hub 1005 couples with an I/O subsystem 1011 via a communication link 1006. The I/O subsystem 1011 includes an I/O hub 1007 that can enable the computing system 1000 to receive input from one or more input device(s) 1008. Additionally, the I/O hub 1007 can enable a display controller, which may be included in the one or more processor(s) 1002, to provide outputs to one or more display device(s) 1010A. In some examples the one or more display device(s) 1010A coupled with the I/O hub 1007 can include a local, internal, or embedded display device.

The processing subsystem 1001, for example, includes one or more parallel processor(s) 1012 coupled to memory hub 1005 via a bus or communication link 1013. The communication link 1013 may be one of any number of standards-based communication link technologies or protocols, such as, but not limited to PCI Express, or may be a vendor specific communications interface or communications fabric. The one or more parallel processor(s) 1012 may form a computationally focused parallel or vector processing system that can include a large number of processing cores and/or processing clusters, such as a many integrated core (MIC) processor. For example, the one or more parallel processor(s) 1012 form a graphics processing subsystem that can output pixels to one of the one or more display device(s) 1010A coupled via the I/O hub 1007. The one or more parallel processor(s) 1012 can also include a display controller and display interface (not shown) to enable a direct connection to one or more display device(s) 1010B.

Within the I/O subsystem 1011, a system storage unit 1014 can connect to the I/O hub 1007 to provide a storage mechanism for the computing system 1000. An I/O switch 1016 can be used to provide an interface mechanism to enable connections between the I/O hub 1007 and other components, such as a network adapter 1018 and/or wireless network adapter 1019 that may be integrated into the platform, and various other devices that can be added via one or more add-in device(s) 1020. The add-in device(s) 1020 may also include, for example, one or more external graphics processor devices, graphics cards, and/or compute accelerators. The network adapter 1018 can be an Ethernet adapter or another wired network adapter. The wireless network adapter 1019 can include one or more of a Wi-Fi, Bluetooth, near field communication (NFC), or other network device that includes one or more wireless radios.

The computing system 1000 can include other components not explicitly shown, including USB or other port connections, optical storage drives, video capture devices, and the like, which may also be connected to the I/O hub 1007. Communication paths interconnecting the various components in FIG. 10 may be implemented using any suitable protocols, such as PCI (Peripheral Component Interconnect) based protocols (e.g., PCI-Express), or any other bus or point-to-point communication interfaces and/or protocol(s), such as the NVLink high-speed interconnect, Compute Express Link^{™} (CXL^{™}) (e.g., CXL.mem), Infinity Fabric (IF), Ethernet (IEEE 802.3), remote direct memory access (RDMA), InfiniBand, Internet Wide Area RDMA Protocol (iWARP), Transmission Control Protocol (TCP), User Datagram Protocol (UDP), quick UDP Internet Connections (QUIC), RDMA over Converged Ethernet (RoCE), Intel QuickPath Interconnect (QPI), Intel Ultra Path Interconnect (UPI), Intel On-Chip System Fabric (IOSF), Omnipath, HyperTransport, Advanced Microcontroller Bus Architecture (AMBA) interconnect, OpenCAPI, Gen-Z, Cache Coherent Interconnect for Accelerators (CCIX), 3GPP Long Term Evolution (LTE) (4G), 3GPP 5G, and variations thereof, orwired or wireless interconnect protocols known in the art. In some examples, data can be copied or stored to virtualized storage nodes using a protocol such as non-volatile memory express (NVMe) over Fabrics (NVMe-oF) or NVMe.

The one or more parallel processor(s) 1012 may incorporate circuitry optimized for graphics and video processing, including, for example, video output circuitry, and constitutes a graphics processing unit (GPU). Alternatively or additionally, the one or more parallel processor(s) 1012 can incorporate circuitry optimized for general purpose processing, while preserving the underlying computational architecture, described in greater detail herein. Components of the computing system 1000 may be integrated with one or more other system elements on a single integrated circuit. For example, the one or more parallel processor(s) 1012, memory hub 1005, processor(s) 1002, and I/O hub 1007 can be integrated into a system on chip (SoC) integrated circuit. Alternatively, the components of the computing system 1000 can be integrated into a single package to form a system in package (SIP) configuration. In some examples at least a portion of the components of the computing system 1000 can be integrated into a multi-chip module (MCM), which can be interconnected with other multi-chip modules into a modular computing system.

It will be appreciated that the computing system 1000 shown herein is illustrative and that variations and modifications are possible. The connection topology, including the number and arrangement of bridges, the number of processor(s) 1002, and the number of parallel processor(s) 1012, may be modified as desired. For instance, system memory 1004 can be connected to the processor(s) 1002 directly rather than through a bridge, while other devices communicate with system memory 1004 via the memory hub 1005 and the processor(s) 1002. In other alternative topologies, the parallel processor(s) 1012 are connected to the I/O hub 1007 or directly to one of the one or more processor(s) 1002, rather than to the memory hub 1005. In other examples, the I/O hub 1007 and memory hub 1005 may be integrated into a single chip. It is also possible that two or more sets of processor(s) 1002 are attached via multiple sockets, which can couple with two or more instances of the parallel processor(s) 1012.

Some of the particular components shown herein are optional and may not be included in all implementations of the computing system 1000. For example, any number of add-in cards or peripherals may be supported, or some components may be eliminated. Furthermore, some architectures may use different terminology for components similar to those illustrated in FIG. 10. For example, the memory hub 1005 may be referred to as a Northbridge in some architectures, while the I/O hub 1007 may be referred to as a Southbridge.

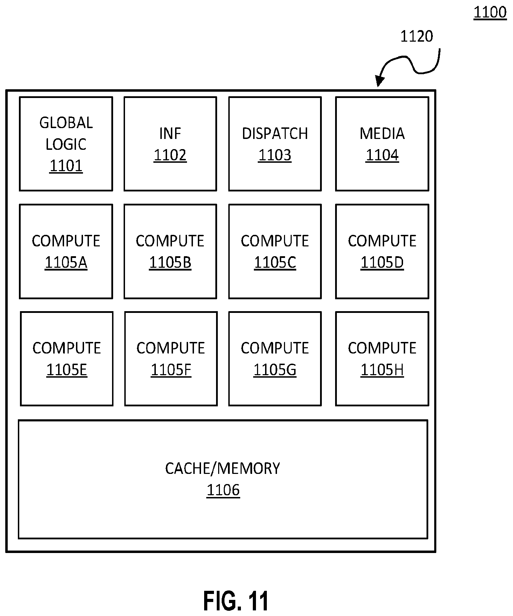

FIG. 11 shows a parallel compute system 1100, according to some examples. In some examples the parallel compute system 1100 includes a parallel processor 1120, which can be a graphics processor or compute accelerator as described herein. The parallel processor 1120 includes a global logic unit 1101, an interface 1102, a thread dispatcher 1103, a media unit 1104, a set of compute units 1105A-1105H, and a cache/memory units 1106. The global logic unit 1101, in some examples, includes global functionality for the parallel processor 1120, including device configuration registers, global schedulers, power management logic, and the like. The interface 1102 can include a front-end interface for the parallel processor 1120. The thread dispatcher 1103 can receive workloads from the interface 1102 and dispatch threads for the workload to the compute units 1105A-1105H. If the workload includes any media operations, at least a portion of those operations can be performed by the media unit 1104. The media unit can also offload some operations to the compute units 1105A-1105H. The cache/memory units 1106 can include cache memory (e.g., L3 cache) and local memory (e.g., HBM, GDDR) for the parallel processor 1120. Compute units 1105 may include units for one or more of a network or communication processor, a core, a graphics processor, a general purpose graphics processing unit (GPGPU), a neural-network processing unit (NPU), an embedded processor, a security processor, a cryptographic accelerator, a matrix accelerator, an in-memory analytics accelerator, a compression accelerator, a data streaming accelerator, or the like.

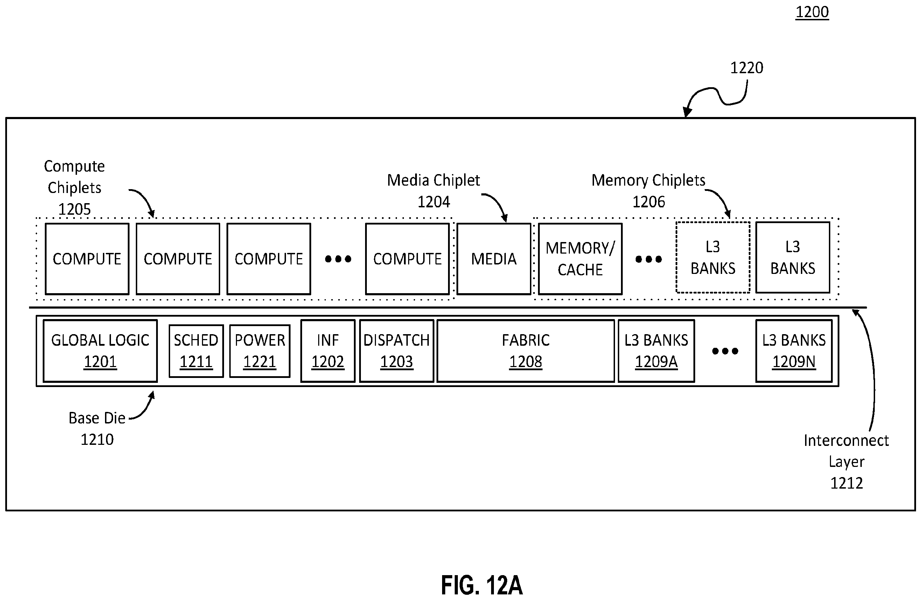

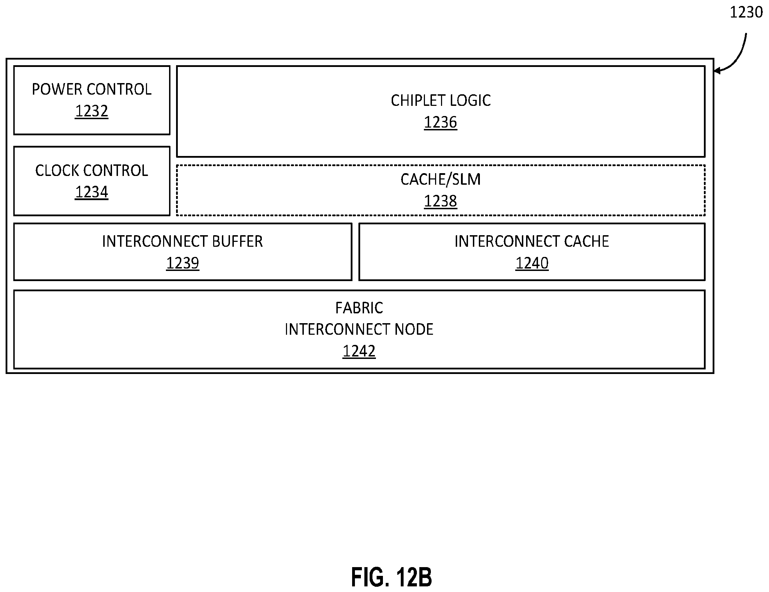

FIGS. 12A-12B illustrate a hybrid logical/physical view of a disaggregated parallel processor, according to examples described herein. FIG. 12A illustrates a disaggregated parallel compute system 1200. FIG. 12B illustrates a chiplet 1230 of the disaggregated parallel compute system 1200.

As shown in FIG. 12A, a disaggregated parallel compute system 1200 can include a parallel processor 1220 in which the various components of the parallel processor SOC are distributed across multiple chiplets. Each chiplet can be a distinct IP core that is independently designed and configured to communicate with other chiplets via one or more common interfaces. The chiplets include but are not limited to compute chiplets 1205, a media chiplet 1204, and memory chiplets 1206. Each chiplet can be separately manufactured using different process technologies. For example, compute chiplets 1205 may be manufactured using the smallest or most advanced process technology available at the time of fabrication, while memory chiplets 1206 or other chiplets (e.g., I/O, networking, etc.) may be manufactured using a larger or less advanced process technologies.

The various chiplets can be bonded to a base die 1210 and configured to communicate with each other and logic within the base die 1210 via an interconnect layer 1212. In some examples, the base die 1210 can include global logic 1201, which can include scheduler 1211 and power management 1221 logic units, an interface 1202, a dispatch unit 1203, and an interconnect fabric 1208 coupled with or integrated with one or more L3 cache banks 1209A-1209N. The interconnect fabric 1208 can be an inter-chiplet fabric that is integrated into the base die 1210. Logic chiplets can use the fabric 1208 to relay messages between the various chiplets. Additionally, L3 cache banks 1209A-1209N in the base die and/or L3 cache banks within the memory chiplets 1206 can cache data read from and transmitted to DRAM chiplets within the memory chiplets 1206 and to system memory of a host.

In some examples the global logic 1201 is a microcontroller that can execute firmware to perform scheduler 1211 and power management 1221 functionality for the parallel processor 1220. The microcontroller that executes the global logic can be tailored for the target use case of the parallel processor 1220. The scheduler 1211 can perform global scheduling operations for the parallel processor 1220. The power management 1221 functionality can be used to enable or disable individual chiplets within the parallel processor when those chiplets are not in use.

The various chiplets of the parallel processor 1220 can be designed to perform specific functionality that, in existing designs, would be integrated into a single die. A set of compute chiplets 1205 can include clusters of compute units (e.g., execution units, streaming multiprocessors, etc.) that include programmable logic to execute compute or graphics shader instructions. A media chiplet 1204 can include hardware logic to accelerate media encode and decode operations. Memory chiplets 1206 can include volatile memory (e.g., DRAM) and one or more SRAM cache memory banks (e.g., L3 banks).

As shown in FIG. 12B, each chiplet 1230 can include common components and application specific components. Chiplet logic 1236 within the chiplet 1230 can include the specific components of the chiplet, such as an array of streaming multiprocessors, compute units, or execution units described herein. The chiplet logic 1236 can couple with an optional cache or shared local memory 1238 or can include a cache or shared local memory within the chiplet logic 1236. The chiplet 1230 can include a fabric interconnect node 1242 that receives commands via the inter-chiplet fabric. Commands and data received via the fabric interconnect node 1242 can be stored temporarily within an interconnect buffer 1239. Data transmitted to and received from the fabric interconnect node 1242 can be stored in an interconnect cache 1240. Power control 1232 and clock control 1234 logic can also be included within the chiplet. The power control 1232 and clock control 1234 logic can receive configuration commands via the fabric can configure dynamic voltage and frequency scaling for the chiplet 1230. In some examples, each chiplet can have an independent clock domain and power domain and can be clock gated and power gated independently of other chiplets.

At least a portion of the components within the illustrated chiplet 1230 can also be included within logic embedded within the base die 1210 of FIG. 12A. For example, logic within the base die that communicates with the fabric can include a version of the fabric interconnect node 1242. Base die logic that can be independently clock or power gated can include a version of the power control 1232 and/or clock control 1234 logic.

Thus, while various examples described herein use the term SOC to describe a device or system having a processor and associated circuitry (e.g., Input/Output ("I/O") circuitry, power delivery circuitry, memory circuitry, etc.) integrated monolithically into a single Integrated Circuit ("IC") die, or chip, the present disclosure is not limited in that respect. For example, in various examples of the present disclosure, a device or system can have one or more processors (e.g., one or more processor cores) and associated circuitry (e.g., Input/Output ("I/O") circuitry, power delivery circuitry, etc.) arranged in a disaggregated collection of discrete dies, tiles and/or chiplets (e.g., one or more discrete processor core die arranged adjacent to one or more other die such as memory die, I/O die, etc.). In such disaggregated devices and systems the various dies, tiles and/or chiplets can be physically and electrically coupled together by a package structure including, for example, various packaging substrates, interposers, active interposers, photonic interposers, interconnect bridges and the like. The disaggregated collection of discrete dies, tiles, and/or chiplets can also be part of a System-on-Package ("SoP")."

Program code may be applied to input information to perform the functions described herein and generate output information. The output information may be applied to one or more output devices, in known fashion. For purposes of this application, a processing system includes any system that has a processor, such as, for example, a digital signal processor (DSP), a microcontroller, an application specific integrated circuit (ASIC), a field programmable gate array (FPGA), a microprocessor, or any combination thereof.

The program code may be implemented in a high-level procedural or object-oriented programming language to communicate with a processing system. The program code may also be implemented in assembly or machine language, if desired. In fact, the mechanisms described herein are not limited in scope to any particular programming language. In any case, the language may be a compiled or interpreted language.

Examples of the mechanisms disclosed herein may be implemented in hardware, software, firmware, or a combination of such implementation approaches. Examples may be implemented as computer programs or program code executing on programmable systems comprising at least one processor, a storage system (including volatile and non-volatile memory and/or storage elements), at least one input device, and at least one output device.

Such machine-readable storage media may include, without limitation, non-transitory, tangible arrangements of articles manufactured or formed by a machine or device, including storage media such as hard disks, any other type of disk including floppy disks, optical disks, compact disk read-only memories (CD-ROMs), compact disk rewritables (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), phase change memory (PCM), magnetic or optical cards, or any other type of media suitable for storing electronic instructions.

Accordingly, examples also include non-transitory, tangible machine-readable media containing instructions or containing design data, such as Hardware Description Language (HDL), which defines structures, circuits, apparatuses, processors and/or system features described herein. Such examples may also be referred to as program products.

### Emulation (including binary translation, code morphing, etc.).

In some cases, an instruction converter may be used to convert an instruction from a source instruction set architecture to a target instruction set architecture. For example, the instruction converter may translate (e.g., using static binary translation, dynamic binary translation including dynamic compilation), morph, emulate, or otherwise convert an instruction to one or more other instructions to be processed by the core. The instruction converter may be implemented in software, hardware, firmware, or a combination thereof. The instruction converter may be on processor, off processor, or part on and part off processor.

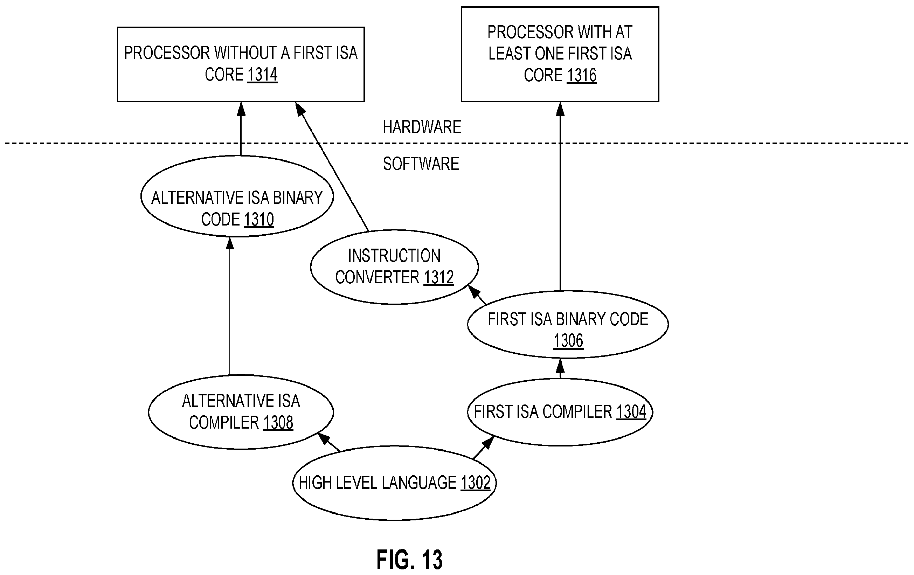

FIG. 13 is a block diagram illustrating the use of a software instruction converter to convert binary instructions in a source ISA to binary instructions in a target ISA according to examples. In the illustrated example, the instruction converter is a software instruction converter, although alternatively the instruction converter may be implemented in software, firmware, hardware, or various combinations thereof. FIG. 13 shows a program in a high-level language 1302 may be compiled using a first ISA compiler 1304 to generate first ISA binary code 1306 that may be natively executed by a processor with at least one first ISA core 1316. The processor with at least one first ISA core 1316 represents any processor that can perform substantially the same functions as an Intel^{®} processor with at least one first ISA core by compatibly executing or otherwise processing (1) a substantial portion of the first ISA or (2) object code versions of applications or other software targeted to run on an Intel processor with at least one first ISA core, in order to achieve substantially the same result as a processor with at least one first ISA core. The first ISA compiler 1304 represents a compiler that is operable to generate first ISA binary code 1306 (e.g., object code) that can, with or without additional linkage processing, be executed on the processor with at least one first ISA core 1316. Similarly, FIG. 13 shows the program in the high-level language 1302 may be compiled using an alternative ISA compiler 1308 to generate alternative ISA binary code 1310 that may be natively executed by a processor without a first ISA core 1314. The instruction converter 1312 is used to convert the first ISA binary code 1306 into code that may be natively executed by the processor without a first ISA core 1314. This converted code is not necessarily to be the same as the alternative ISA binary code 1310; however, the converted code will accomplish the general operation and be made up of instructions from the alternative ISA. Thus, the instruction converter 1312 represents software, firmware, hardware, or a combination thereof that, through emulation, simulation or any other process, allows a processor or other electronic device that does not have a first ISA processor or core to execute the first ISA binary code 1306.

### IP Core Implementations

One or more aspects of at least some examples may be implemented by representative code stored on a machine-readable medium which represents and/or defines logic within an integrated circuit such as a processor. For example, the machine-readable medium may include instructions which represent various logic within the processor. When read by a machine, the instructions may cause the machine to fabricate the logic to perform the techniques described herein. Such representations, known as "IP cores," are reusable units of logic for an integrated circuit that may be stored on a tangible, machine-readable medium as a hardware model that describes the structure of the integrated circuit. The hardware model may be supplied to various customers or manufacturing facilities, which load the hardware model on fabrication machines that manufacture the integrated circuit. The integrated circuit may be fabricated such that the circuit performs operations described in association with any of the examples described herein.

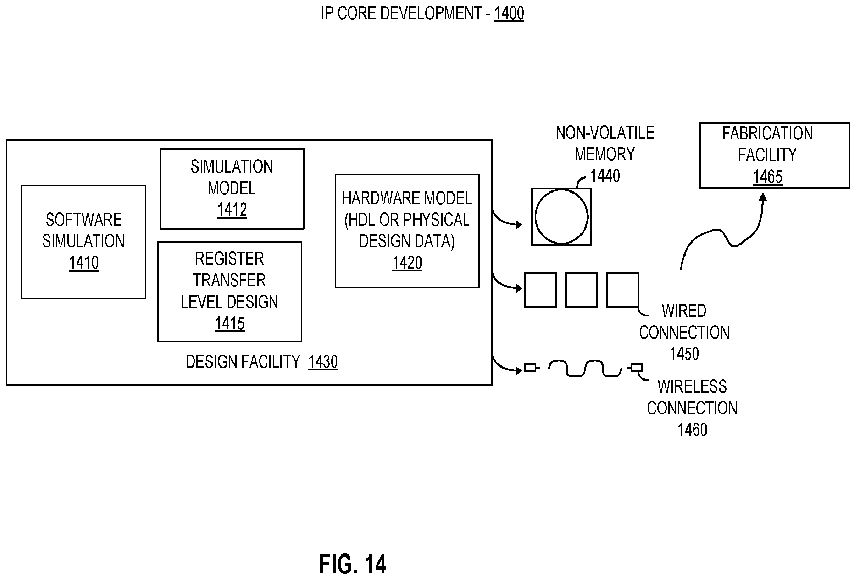

FIG. 14 is a block diagram illustrating an IP core development system 1400 that may be used to manufacture an integrated circuit to perform operations according to some examples. The IP core development system 1400 may be used to generate modular, re-usable designs that can be incorporated into a larger design or used to construct an entire integrated circuit (e.g., an SOC integrated circuit). A design facility 1430 can generate a software simulation 1410 of an IP core design in a high-level programming language (e.g., C/C++). The software simulation 1410 can be used to design, test, and verify the behavior of the IP core using a simulation model 1412. The simulation model 1412 may include functional, behavioral, and/or timing simulations. A register transfer level (RTL) design 1415 can then be created or synthesized from the simulation model 1412. The RTL design 1415 is an abstraction of the behavior of the integrated circuit that models the flow of digital signals between hardware registers, including the associated logic performed using the modeled digital signals. In addition to an RTL design 1415, lower-level designs at the logic level or transistor level may also be created, designed, or synthesized. Thus, the particular details of the initial design and simulation may vary.

The RTL design 1415 or equivalent may be further synthesized by the design facility into a hardware model 1420, which may be in a hardware description language (HDL), or some other representation of physical design data. The HDL may be further simulated or tested to verify the IP core design. The IP core design can be stored for delivery to a fabrication facility 1465 using non-volatile memory 1440 (e.g., hard disk, flash memory, or any non-volatile storage medium). Alternatively, the IP core design may be transmitted (e.g., via the Internet) over a wired connection 1450 or wireless connection 1460. The fabrication facility 1465 may then fabricate an integrated circuit that is based at least in part on the IP core design. The fabricated integrated circuit can be configured to perform operations in accordance with at least some examples described herein.

References to "some examples," "an example," etc., indicate that the example described may include a particular feature, structure, or characteristic, but every example may not necessarily include the particular feature, structure, or characteristic. Moreover, such phrases are not necessarily referring to the same example. Further, when a particular feature, structure, or characteristic is described in connection with an example, it is submitted that it is within the knowledge of one skilled in the art to affect such feature, structure, or characteristic in connection with other examples whether or not explicitly described.

Examples include, but are not limited to:
1. An apparatus comprising:
   a memory bandwidth monitor per thread local to a core, each thread's local bandwidth monitor to at least allocate bandwidth for memory requests originating from the thread according to a class of service (CLOS) to be stored in a field of a first control register wherein the CLOS is to point to a bandwidth scale encoded in a field of a second control register; and
   execution resources to support execution of at least one thread of the core.
2. The apparatus of example 1, wherein the bandwidth scale encodes a value of bytes per second.
3. The apparatus of any of examples 1-2, wherein the field of a second control register is further to indicate a disablement of L1 cache to L2 cache throttling.
4. The apparatus of any of examples 1-2, wherein the field of a second control register is further to enable user/supervisor mode bandwidth throttling.
5. The apparatus of any of examples 1-4, further comprising:
   a third control register to indicate an allocation of bandwidth for the CLOS.
6. The apparatus of example 5, wherein an indication of an allocation of bandwidth for the CLOS is a bandwidth throttle level.
7. The apparatus of any of examples 1-6, further comprising:
   a memory bandwidth monitor per thread external to the core to monitor memory requests from the core and to provide feedback regarding bandwidth based on software allocation and bandwidth monitoring.
8. The apparatus of any of examples 1-7, wherein the memory request is to a main memory.
9. The apparatus of any of examples 1-8, wherein the bandwidth is to be adjusted in a non-linear fashion.
10. The apparatus of any of examples 1-8, wherein the bandwidth is to be adjusted in a linear fashion.
11. The apparatus of any of examples 1-10, wherein support for per thread memory bandwidth is enumerated in a CPUID leaf.
12. The apparatus of any of examples 1-11, wherein the core further comprises:
   a local queue to receive memory requests from a thread of the core, wherein a number of available entries in the local queue is to be configured based on the class of service.
13. The apparatus of any of examples 1-12, wherein the core further comprises:
   an external queue to receive memory requests from outside of the core, wherein a number of available entries in the external queue is to be configured based on the class of service.
14. A system comprising:
   a core including:
   a memory bandwidth monitor per thread local to a core, each thread's local bandwidth monitor to at least allocate bandwidth for memory requests originating from the thread according to a class of service (CLOS) to be stored in a field of a first control register wherein the CLOS is to point to a bandwidth scale encoded in a field of a second control register; and
   execution resources to support execution of at least one thread of the core; and memory coupled to the core.
15. The system of example 14, wherein the bandwidth scale encodes a value of bytes per second.
16. The system of any of examples 14-15, wherein the field of a second control register is further to indicate a disablement of L1 cache to L2 cache throttling.
17. The system of any of examples 14-15, wherein the field of a second control register is further to enable user/supervisor mode bandwidth throttling.
18. The system of any of examples 14-17, further comprising:
   a third control register to indicate an allocation of bandwidth for the CLOS.
19. The system of example 18, wherein an indication of an allocation of bandwidth for the CLOS is a bandwidth throttle level.
20. The system of any of examples 14-19, further comprising:
   a memory bandwidth monitor per thread external to the core to monitor memory requests from the core and to provide feedback regarding bandwidth based on software allocation and bandwidth monitoring.

Moreover, in the various examples described above, unless specifically noted otherwise, disjunctive language such as the phrase "at least one of A, B, or C" or "A, B, and/or C" is intended to be understood to mean either A, B, or C, or any combination thereof (i.e. A and B, A and C, B and C, and A, B and C).

The specification and drawings are, accordingly, to be regarded in an illustrative rather than a restrictive sense. It will, however, be evident that various modifications and changes may be made thereunto without departing from the broader spirit and scope of the disclosure as set forth in the claims.

## Claims

1. An apparatus comprising:
a memory bandwidth monitor means per thread local to a core, each thread's local bandwidth monitor to at least allocate bandwidth for memory requests originating from the thread according to a class of service (CLOS) to be stored in a field of a first control register wherein the CLOS is to point to a bandwidth scale encoded in a field of a second control register; and
execution resource means to support execution of at least one thread of the core.

2. The apparatus of claim 1, wherein the bandwidth scale encodes a value of bytes per second.

3. The apparatus of any of claims 1-2, wherein the field of a second control register is further to indicate a disablement of L1 cache to L2 cache throttling.

4. The apparatus of any of claims 1-3, wherein the field of a second control register is further to enable user/supervisor mode bandwidth throttling.

5. The apparatus of any of claims 1-4, further comprising:
a third control register to indicate an allocation of bandwidth for the CLOS.

6. The apparatus of claim 5, wherein an indication of an allocation of bandwidth for the CLOS is a bandwidth throttle level.

7. The apparatus of claim 1, further comprising:
a memory bandwidth monitor means per thread external to the core to monitor memory requests from the core and to provide feedback regarding bandwidth based on software allocation and bandwidth monitoring.

8. The apparatus of any of claims 1-7, wherein the memory request is to a main memory.

9. The apparatus of any of claims 1-8, wherein the bandwidth is to be adjusted in a non-linear fashion.

10. The apparatus of any of claims 1-8, wherein the bandwidth is to be adjusted in a linear fashion.

11. The apparatus of any of claims 1-10, wherein support for per thread memory bandwidth is enumerated in a CPUID leaf.

12. The apparatus of any of claims 1-11, wherein the core further comprises:
a local queue to receive memory requests from a thread of the core, wherein a number of available entries in the local queue is to be configured based on the class of service.

13. The apparatus of any of claims 1-12, wherein the core further comprises:
an external queue to receive memory requests from outside of the core, wherein a number of available entries in the external queue is to be configured based on the class of service.

14. The apparatus of any of claims 1-13, further comprising:
performance monitoring logic.
